# EUROPEAN PATENT SPECIFICATION

(11) **EP 3 636 009 B1**
(45) Date of publication and mention of the grant of the patent: **07.06.2023**
(21) Application number: 17916266.4
(22) Date of filing: 26.06.2017
(51) Int. Cl.: H04W 52/00, G05B 11/01, H04B 11/00, H04B 1/3827, H04B 1/16, H04B 3/00

(54) **ADAPTOR AND CONTROLLING METHOD FOR THE SAME**
ADAPTER UND STEUERUNGSVERFAHREN DAFÜR
ADAPTATEUR ET PROCÉDÉ DE COMMANDE ASSOCIÉ

(43) Date of publication of application: 15.04.2020
(73) Proprietor: Tridonic GmbH & Co KG, 6851 Dornbirn (AT)
(72) Inventor: WANG, Yueliang, Shenzhen Guangdong 518109 (CN); HU, Zaosheng, Shen Zhen Bao'an Guangdong 518109 (CN); YANG, Jiaqi, Shenzhen Guangdong 518109 (CN); ZHOU, Li, Shenzhen Guangdong 518109 (CN)
(74) Representative: Rupp, Christian
(86) International application number: PCT/CN2017/090089
(87) International publication number: WO 2019/000189

(56) References cited:
- WO-A2-2010/051281
- CN-A- 102 982 963
- CN-A- 106 027 268
- CN-U- 202 550 889
- KR-A- 20040 107 024
- KR-A- 20040 107 024
- KR-A- 20060 001 991
- KR-A- 20160 070 505
- US-A1- 2011 191 814
- US-B1- 9 395 441

## Description

### TECHNICAL FIELD

Embodiments of the present disclosure generally relate to the field of communications, and more particularly, to an adaptor and a controlling method of the adaptor.

### BACKGROUND

This section introduces aspects that may facilitate better understanding of the present disclosure. Accordingly, the statements of this section are to be read in this light and are not to be understood as admissions about what is in the prior art or what is not in the prior art.

Portable devices are more popular at present. Portable devices could be smart phone, portable personal computer (PC), tablets and so on.

Users can operate the portable devices, with the help of applications (APP) installed in the portable devices, users can use the portable devices to control other devices connected with portable devices.

KR 2016 0070505 A discloses an adaptor (power supply apparatus) for connecting a front end device (electronic price indicator) with a back end device (server) using a *partially joint transfer* of power from an external power source (wall power source, or battery) to the front end device and data from the back-end device to the front end device.

WO 2010/051281 A2 discloses an adaptor (arrangement of first connector, cable section and second connector) for connecting a front end device (handheld device) with a back end device (presentation or rendering device) using *a joint transfer* of power and data from the back end device to the front end device.

US 9,395,441 B 1 discloses an adaptor (powerline network server) for connecting a front end device (user device) with a back end device (GPS receiver, or remote server) using a *partially joint transfer* of power from an external power source (power grid) to the front end device, and data from the back end device to the front end device.

KR 2004/0107024 A discloses an adaptor (display power controller) for connecting a front end device (PC) with a back end device (monitor) using a *partially joint transfer* of power from the adaptor to the back end device, and data (a Display Power Mode/DPM state of a PC video adapter) from the front end device to the back end device.

### SUMMARY

When using a portable device to control other device, adaptor was often needed to connect the portable device and the other device. However, inventor of this disclosure found that, additional power supply was needed to power up the other device, and cost of the adaptor was relatively high.

The invention is defined by the appended independent claims. Preferred embodiments are set forth in the dependent claims.

According to various embodiments of the present disclosure, a power signal received from the front end device could be modulated in accordance with a data signal received from the front end device. Therefore, additional power supply is not needed to power up the back end device, the cost of the adaptor is lower.

### BRIEF DESCRIPTION OF THE DRAWINGS

The above and other aspects, features, and benefits of various embodiments of the disclosure will become more fully apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
Fig. 1 is a diagram of an adaptor in accordance with an embodiment of the present disclosure;
Fig. 2 is a diagram of the modulated circuit in accordance with an embodiment of the present disclosure;
Fig. 3 is a diagram of the simplified circuit of the modulated circuit under "write mode" in accordance with an embodiment of the present disclosure;
Fig. 4 is a diagram of the simplified circuit of the modulated circuit under "read mode" in accordance with an embodiment of the present disclosure;
Fig. 5 shows a flowchart of a controlling method 500 of the adaptor.

### DETAILED DESCRIPTION

The present disclosure will now be discussed with reference to several example embodiments. It should be understood that these embodiments are discussed only for the purpose of enabling those skilled persons in the art to better understand and thus implement the present disclosure, rather than suggesting any limitations on the scope of the present disclosure.

As used herein, the terms "first" and "second" refer to different elements. The singular forms "a" and "an" are intended to include the plural forms as well, unless the context clearly indicates otherwise. The terms "comprises," "comprising," "has," "having," "includes" and/or "including" as used herein, specify the presence of stated features, elements, and/or components and the like, but do not preclude the presence or addition of one or more other features, elements, components and/or combinations thereof. The term "based on" is to be read as "based at least in part on." The term "one embodiment" and "an embodiment" are to be read as "at least one embodiment." The term "another embodiment" is to be read as "at least one other embodiment." Other definitions, explicit and implicit, may be included below.

### First aspect of embodiments

An adaptor is provided in a first embodiment. The adaptor is used for connecting a front end device with a back end device.

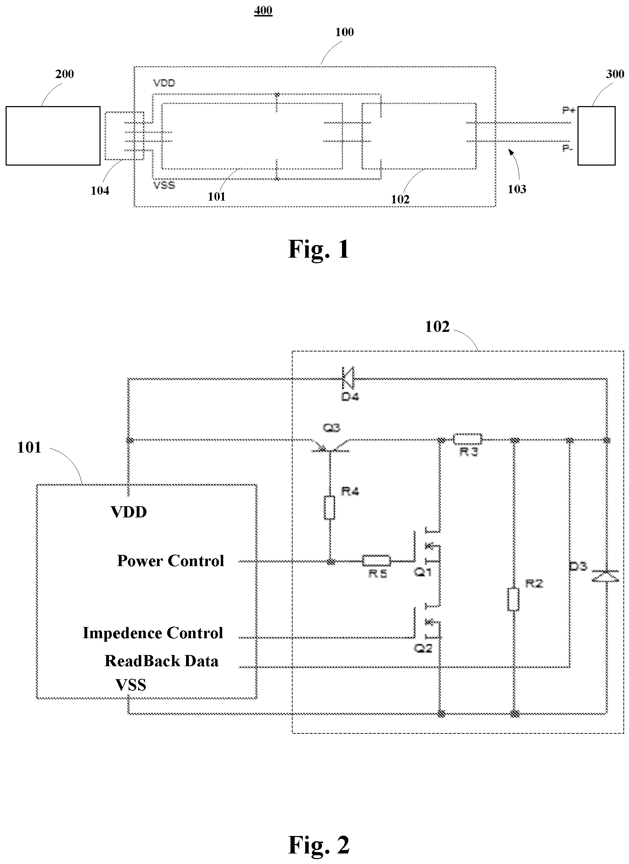

Fig. 1 is a diagram of an adaptor in accordance with an embodiment of the present disclosure. As shown in Fig. 1, the adaptor 100 is used for connecting a front end device 200 with a back end device 300.

As shown in Fig. 1, the adaptor 100 includes a controller 101 and a modulator circuit 102.

In an embodiment, the controller 101 is configured to generate a power controlling signal according to a first data signal received from the front end device; and, the modulator circuit 102 is configured to modulate a power signal according to the power controlling signal, and output a modulated signal to an output terminal 103 of the modulator circuit.

In the embodiment, the power signal could be received from the front end device 200 and supplied to the controller 101. That is to say, the power signal is used to power up the controller 101.

In the embodiment, the power signal received from the front end device could be modulated in accordance with the first data signal received from the front end device, and the modulated signal could be generated and sent to the back end device, thus, the first data signal could be transmitted by the modulated signal. As a result, the back end device could obtain the first data signal from the modulated signal, and the back end device could be powered up by the modulated signal. Therefore, additional power supply is not needed to power up the back end device, the cost of the adaptor is lower.

In the embodiment, the front end device could be a portable device, such as smart phone, portable personal computer (PC), tablets and so on, but it is not limited thereto, the front end device may be other device.

In the embodiment, the front end device 200 may include a connecting interface (not shown), which could connect with the adaptor 100. The connecting interface could be, for example, USB interface. The connecting interface may include multiple pins (not shown), for example, a first pin could transmit the power signal with a voltage of VDD, a second pin could transmit a low level signal with a voltage of VSS, a third pin and a forth pin could transmit the first data signal. It is noted that, the embodiment is not limited thereto, the connecting interface may have other structure.

In the embodiment, the back end device 300 could be a lighting driver, which could generate a driving signal for driving a lighting element, the lighting element could be, for example, LED (light emitting diode), but it is not limited thereto, the back end device may be other device. The back end device 300 may include a connecting interface (not shown), which could connect with the adaptor 100.

In the embodiment, the front end device 200, the adaptor 100 and the back end device 300 could be connected to form a system. For example, the front end device 200 is a smart phone, the back end device 300 is part of a LED driver; the smart phone generate a current configuration signal as the first data signal under the operation of a user, the adaptor 200 receives the current configuration signal and the power signal, and output the modulated signal to the LED driver, LED driver could demodulate the modulated signal to obtain the power signal and the current configuration signal; the LED driver uses the power signal as power supply, and generate a driving current according to the current configuration signal. It is noted that, the embodiment is not limited thereto, other system may be formed.

In the embodiment, the output terminal 103 of the adaptor could connect with the connecting interface of the backend device 300. As shown in Fig. 1, the output terminal 103may include 2 pins, one is first pin P+ and the other is second pin P-.

In the embodiment, the output terminal 103 may include 2 pins, one is first pin P+ and the other is second pin P-. But the embodiment is not limited thereto, the output terminal 103 may have other structure.

In the embodiment, as shown in Fig. 1, the adaptor 100 could further include a connector 104. The connector 104 could be configured to connect with the front end device 200, so as to receive the power signal, the low level signal and the first data signal from the front end device 200. For example, the connector 104 could connect with the connecting interface of the front end device 200.

In the embodiment, the modulated circuit 102 could be configured to apply the power signal or a low level signal to the output terminal 103 according to the power controlling signal, so as to output the modulated signal to the output terminal 103. For example, the modulated signal could be applied to the first pin P+ of the output terminal 103

In the embodiment, the modulated circuit 102 could be configured to apply the power signal or a low level signal to the output terminal 103 according to the power controlling signal, so as to output the modulated signal to the output terminal 103. For example, the modulated signal could be applied to the first pin P+ of the output terminal 103.

Fig. 2 is a diagram of the modulated circuit in accordance with an embodiment of the present disclosure. As shown in Fig. 2, the modulator circuit 102 includes a first switching element Q3 and a second switching element Q1.

In the embodiment, the first switching element Q3 could be turned on or off under the control of the power controlling signal; and the second switching element Q1 could be turned on or off under the control of the power controlling signal.

In the embodiment, when the first switching element Q3 is turned on, the second switching element Q1 is turned off, the power signal is applied to the output terminal, and the modulated signal turns to a high level,

In the embodiment, when the first switching element Q3 is turned off, the second switching element Q1 is turned on, the low level signal is applied to the output terminal, and the modulated signal turns to a low level.

In the embodiment, the modulator circuit 102 could further include a third switching element Q2, the third switching element Q2 could be turned on or off under the control of an impedance controlling signal of the controller 101.

In the embodiment, when the third switching element Q2 is turned on, the power signal is modulated, and the modulated signal is applied to the first pin P+; when the third switching element Q2 is turned off, the power signal is isolated from the output terminal 103, and the controller 101 could receive a second data signal via the output terminal 103.

As shown in Fig. 2, the first switching element Q3 could be a PNP bipolar transistor, the second switching element Q1 could be an N-MOS transistor, the third switching element Q2 could be an N-MOS transistor.

In the embodiment, the base of the first switching element Q3 connects a power control pin of the controller 101, receiving the power controlling signal. The emitter of the first switching element Q3 connects a VDD pin of the controller 101. The VDD pin of the controller 101 could be applied with the power signal. The collector of the first switching element Q3 connects the first pin P+ of the output terminal 103. Therefore, the first pin P+ and the VDD pin of the controller 101 could be connected by the first switching element Q3.

In the embodiment, the second switching element Q1 and the third switching element Q2 connects in serial between the first pin P+ and the second pin P-. The gate of the second switching element Q1 connects to the power control pin of the controller 101. The gate of the third switching element Q2 connects to an impedance control pin of the controller 101, receiving the impedance controlling signal.

In the embodiment, the drain of the second switching element Q1 connects to the collector of Q3, the source of Q2 connects to the second pin P-. The second pin P-could connect to a VSS pin of the controller 101. The VSS pin of the controller 101 could be applied with the low level signal.

In the embodiment, a readback data pin of the controller 101 could connect to the first pin P+. Therefore, when the third switching element Q2 is turned off, the readback data pin of the controller 101 could receive the second data signal via the output terminal.

As shown in Fig. 2, the modulator circuit 102 further includes a first diode D3 and a second diode D4. The first diode D3 could be set between the first pin and the second pin, and the second diode D4 could be set between the first pin and the VDD pin of the controller 101. Therefore, the first diode D3 and the second diode D4 could provide protection to the modulator circuit 102 and the back end device 300.

As shown in Fig. 2, the modulator circuit 102 further includes resistor R2, R3, R4, and R5.

The working principle of the modulator circuit 102 is as follows, where "1" refers to high level and "0" refers to low level.

When the impedance controlling signal output from the impedance control pin of the control is "1", Q2 is turned on, the adaptor 100 turns into "write mode". Under "write mode", when the power controlling signal output from the power control pin is "0", Q3 is turned on and Q1 is turned off, thus the first pin P+ connects with the VDD pin, and voltage of the first pin P+ is "1"; when the power controlling signal output from the power control pin is "1", Q3 is turned off and Q1 is turned on, thus the first pin P+ connects with the VSS pin, and voltage of the first pin P+ is "0".

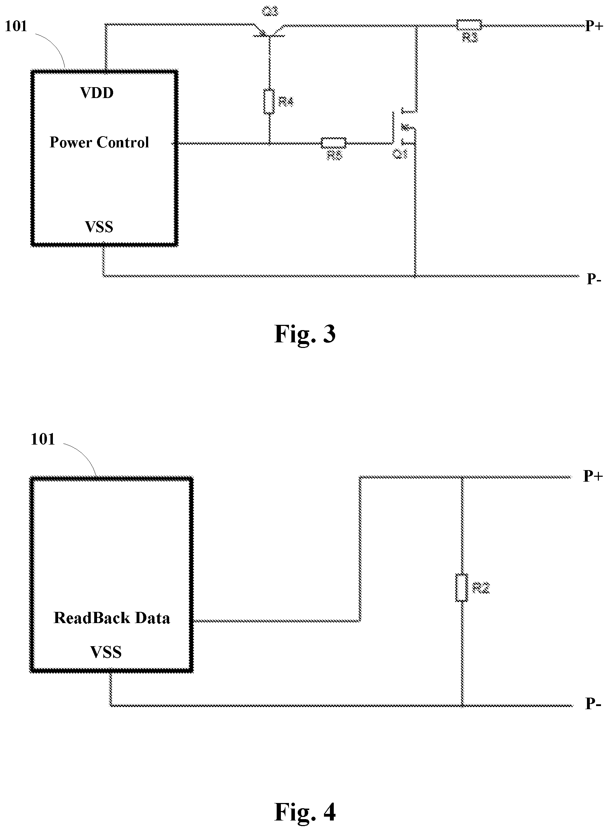

The simplified circuit of the modulator circuit 102 under "write mode" is shown in Fig. 3.

When the impedance controlling signal output from the impedance control pin of the control is "0", Q2 is turned off, the power controlling signal output from the power control pin is "1", Q3 is turned off and Q1 is turned on, the adaptor 100 turns into "read mode". Under "read mode", there is a high resistance state between P+ and P-, and the readback data pin of the controller 101 could connect to the first pin P+. Thus, the readback data pin of the controller 101 could read the second data signal via the output terminal. Therefore, the second data signal of the back end device 300 could feedback to the adaptor 100.

The simplified circuit of the modulator circuit 102 under "read mode" is shown in Fig. 4.

It should be noted that, Fig. 2 is an example of the modulator circuit, the disclosure is not limited thereto, and the modulator circuit may have other structure.

As can be seen from the above embodiments, the power signal received from the front end device could be modulated in accordance with the data signal received from the front end device, and the modulated signal could be generated and sent to the back end device. As a result, the back end device could obtain the data signal according to the modulated signal and could be powered up by the modulated signal. Therefore, additional power supply is not needed to power up the back end device, the cost of the adaptor is lower. Besides, the adaptor could also read data signal from the back end device.

### Second aspect of embodiments

A controlling method of an adaptor is provided in an embodiment. The method is implemented at an adaptor, the adaptor is used for connecting a front end device with a back end device, and the same contents as those in the first aspect of embodiments are omitted.

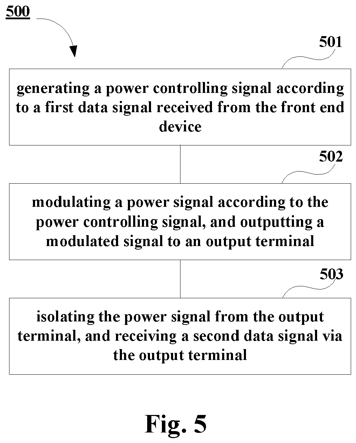

Fig. 5 shows a flowchart of a controlling method 500 of the adaptor.

As shown in Fig. 5, the method 500 includes: generating a power controlling signal according to a first data signal received from the front end device at block 501; and, modulating a power signal according to the power controlling signal, and outputting a modulated signal to an output terminal at block 502.

In an embodiment, the power signal could be received from the front end device and supplied to generate the power controlling signal.

In an embodiment, block 502 includes: applying the power signal or a low level signal to the output terminal according to the power controlling signal, so as to output the modulated signal to the output terminal.

In an embodiment, the method 500 further includes: isolating the power signal from the output terminal, and receiving a second data signal via the output terminal at block 503.

As can be seen from the above embodiments, the power signal received from the front end device could be modulated in accordance with the data signal received from the front end device, and the modulated signal could be generated and sent to the back end device. As a result, the back end device could obtain the data signal according to the modulated signal and could be powered up by the modulated signal. Therefore, additional power supply is not needed to power up the back end device, the cost of the adaptor is lower. Besides, the adaptor could also read data signal from the back end device.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing devices. While various aspects of embodiments of the present disclosure are illustrated and described as block diagrams, flowcharts, or using some other pictorial representation, it will be appreciated that the blocks, apparatus, systems, techniques or methods described herein may be implemented in, as non-limiting examples, hardware, software, firmware, special purpose circuits or logic, general purpose hardware or controller or other computing devices, or some combination thereof.

By way of example, embodiments of the present disclosure can be described in the general context of machine-executable instructions, such as those included in program modules, being executed in a device on a target real or virtual processor. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general-purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

The above program code may be embodied on a machine-readable medium, which may be any tangible medium that may contain, or store a program for use by or in connection with an instruction execution system, apparatus, or device. The machine-readable medium may be a machine-readable signal medium or a machine-readable storage medium. The machine-readable medium may include but not limited to an electronic, magnetic, optical, electromagnetic, infrared, or semiconductor system, apparatus, or device, or any suitable combination of the foregoing.

More specific examples of the machine-readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

In the context of this disclosure, the device may be implemented in the general context of computer system-executable instructions, such as program modules, being executed by a computer system. Generally, program modules may include routines, programs, objects, components, logic, data structures, and so on that perform particular tasks or implement particular abstract data types. The device may be practiced in distributed cloud computing environments where tasks are performed by remote processing devices that are linked through a communications network. In a distributed cloud computing environment, program modules may be located in both local and remote computer system storage media including memory storage devices.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in language specific to structural features and/or methodological acts, it is to be understood that the present disclosure is defined in the appended claims.

## Claims

1. An adaptor (100), used for connecting a front end device (200) with a back end device (300), the adaptor (100) comprising:
a controller (101), configured to generate a power controlling signal according to a first data signal received from the front end device (200); and
a modulator circuit (102), configured to
modulate a power signal according to the power controlling signal, and
output a modulated signal to an output terminal (103) of the modulator circuit (102),
the power signal being received from the front end device (200) and supplied to the controller (101),
wherein the modulator circuit (102) comprises a first switching element (Q3) and a second switching element (Q1),
wherein the output terminal (103) comprises two pins, a first pin and a second pin,
wherein the first switching element (Q3) is connected between the first pin and a VDD pin of the controller (101),
wherein the modulator circuit (102) comprises a first diode (D3) and a second diode (D4), wherein the first diode (D3) is set between the first pin and the second pin, and the second diode (D4) is set between the first pin and the VDD pin of the controller (101).

2. The adaptor (100) according to claim 1, wherein,
the modulator circuit (102) is configured to apply the power signal or a low level signal to the output terminal (103) according to the power controlling signal, so as to output the modulated signal to the output terminal (103).

3. The adaptor (100) according to claim 2,
wherein the first switching element (Q3) is configured to be turned on or off under the control of the power controlling signal; and
wherein the second switching element (Q1) is configured to be turned on or off under the control of the power controlling signal;
wherein, when the first switching element (Q3) is turned on, the second switching element (Q1) is turned off, the power signal is applied to the output terminal (103), and the modulated signal turns to a high level,
when the first switching element (Q3) is turned off, the second switching element (Q1) is turned on, the low level signal is applied to the output terminal (103), and the modulated signal turns to a low level.

4. The adaptor (100) according to claim 3, wherein, the modulator circuit (102) further comprises:
a third switching element (Q2), configured to be turned on or off under the control of an impedance controlling signal of the controller (101),
wherein, when the third switching element (Q2) is turned on, the power signal is modulated,
when the third switching element (Q2) is turned off, the power signal is isolated from the output terminal (103), and the controller (101) receive a second data signal via the output terminal (103).

5. The adaptor (100) according to claim 4, wherein,
the first pin is configured to be applied with the modulated signal, and the second pin is connected with a VSS pin of the controller (101);
the second switching element (Q1) and the third switching element (Q2) connects in serial between the first pin and the second pin.

6. The adaptor (100) according to claim 1, wherein, the adaptor (100) further comprises:
a connector (104), configured to connect with the front end device (200), so as to receive the power signal, the low level signal and the first data signal from the front end device (200).

7. A controlling method of an adaptor (100) according to any of the preceding claims, wherein the adaptor (100) is used for connecting a front end device (200) with a back end device (300), the method comprising:
generating a power controlling signal according to a first data signal received from the front end device (200); and
modulating a power signal according to the power controlling signal, and
outputting a modulated signal to an output terminal (103),
the power signal being received from the front end device (200) and supplied to generate the power controlling signal.

8. The controlling method according to claim 7, wherein, modulating a power signal comprises:
applying the power signal or a low level signal to the output terminal (103) according to the power controlling signal, so as to output the modulated signal to the output terminal (103).

9. The controlling method according to claim 7, wherein, the method further comprises:
isolating the power signal from the output terminal (103), and receiving a second data signal via the output terminal (103).

10. A computer program product being tangibly stored on a computer readable storage medium and including instructions which, when executed on a processor of an equipment, cause the equipment to perform a controlling method of an adaptor (100) according to any of claims 7-8.

## Patentansprüche

1. Adapter (100), der zum Verbinden einer Frontend-Vorrichtung (200) mit einer Backend-Vorrichtung (300) verwendet wird, der Adapter (100) umfassend:
eine Steuerung (101), die konfiguriert ist zum
Erzeugen eines Leistungssteuerungssignals gemäß einem ersten Datensignal, das von der Frontend-Vorrichtung (200) empfangen wird; und
eine Modulatorschaltung (102), die konfiguriert ist zum
Modulieren eines Leistungssignals gemäß dem Leistungssteuerungssignal und
Ausgeben eines modulierten Signals an einen Ausgangsanschluss (103) der Modulatorschaltung (102),
wobei das Leistungssignal von der Frontend-Vorrichtung (200) empfangen und der Steuerung (101) zugeführt wird,
wobei die Modulatorschaltung (102) ein erstes Schaltelement (Q3) und ein zweites Schaltelement (Q1) umfasst,
wobei der Ausgangsanschluss (103) zwei Pins umfasst, einen ersten Pin und einen zweiten Pin,
wobei das erste Schaltelement (Q3) zwischen dem ersten Pin und einem VDD-Pin der Steuerung (101) verbunden ist,
wobei die Modulatorschaltung (102) eine erste Diode (D3) und eine zweite Diode (D4) umfasst, wobei die erste Diode (D3) zwischen dem ersten Pin und dem zweiten Pin angeordnet ist, und die zweite Diode (D4) zwischen dem ersten Pin und dem VDD-Pin der Steuerung (101) angeordnet ist.

2. Adapter (100) nach Anspruch 1, wobei
die Modulatorschaltung (102) konfiguriert ist, um das Leistungssignal oder ein Niederpegelsignal an den Ausgangsanschluss (103) gemäß dem Leistungssteuerungssignal anzulegen, um das modulierte Signal an den Ausgangsanschluss (103) auszugeben.

3. Adapter (100) nach Anspruch 2,
wobei das erste Schaltelement (Q3) konfiguriert ist, um unter der Steuerung des Leistungssteuerungssignals ein- oder ausgeschaltet zu werden; und
wobei das zweite Schaltelement (Q1) konfiguriert ist, um unter der Steuerung des Leistungssteuerungssignals ein- oder ausgeschaltet zu werden;
wobei, wenn das erste Schaltelement (Q3) eingeschaltet wird, das zweite Schaltelement (Q1) ausgeschaltet wird, das Leistungssignal an den Ausgangsanschluss (103) angelegt wird und das modulierte Signal auf einen hohen Pegel umschaltet,
wenn das erste Schaltelement (Q3) ausgeschaltet wird, das zweite Schaltelement (Q1) eingeschaltet wird, das Niederpegelsignal an den Ausgangsanschluss (103) angelegt wird und das modulierte Signal auf einen niedrigen Pegel umschaltet.

4. Adapter (100) nach Anspruch 3, wobei die Modulatorschaltung (102) ferner umfasst:
ein drittes Schaltelement (Q2), das konfiguriert ist, um unter der Steuerung eines Impedanzsteuerungssignals der Steuerung (101) ein- oder ausgeschaltet zu werden,
wobei, wenn das dritte Schaltelement (Q2) eingeschaltet wird, das Leistungssignal moduliert wird,
wenn das dritte Schaltelement (Q2) ausgeschaltet wird, das Leistungssignal von dem Ausgangsanschluss (103) isoliert wird, und die Steuerung (101) ein zweites Datensignal über den Ausgangsanschluss (103) empfängt.

5. Adapter (100) nach Anspruch 4, wobei
der erste Pin konfiguriert ist, um mit dem modulierten Signal angewendet zu werden, und der zweite Pin mit einem VSS-Pin der Steuerung (101) verbunden ist;
das zweite Schaltelement (Q1) und das dritte Schaltelement (Q2) zwischen dem ersten Pin und dem zweiten Pin in Reihe geschaltet sind.

6. Adapter (100) nach Anspruch 1, wobei der Adapter (100) ferner umfasst:
einen Verbinder (104), der konfiguriert ist, um mit der Frontend-Vorrichtung (200) verbunden zu werden, um das Leistungssignal, das Niederpegelsignal und das erste Datensignal von der Frontend-Vorrichtung (200) zu empfangen.

7. Steuerungsverfahren eines Adapters (100) nach einem der vorhergehenden Ansprüche, wobei der Adapter (100) zum Verbinden einer Frontend-Vorrichtung (200) mit einer Backend-Vorrichtung (300) verwendet wird, das Verfahren umfassend:
Erzeugen eines Leistungssteuerungssignals gemäß einem ersten Datensignal, das von der Frontend-Vorrichtung (200) empfangen wird; und
Modulieren eines Leistungssignals gemäß dem Leistungssteuerungssignal und
Ausgeben eines modulierten Signals an einen Ausgangsanschluss (103),
wobei das Leistungssignal von der Frontend-Vorrichtung (200) empfangen und zugeführt wird, um das Leistungssteuerungssignal zu erzeugen.

8. Steuerungsverfahren nach Anspruch 7, wobei das Modulieren eines Leistungssignals umfasst:
Anlegen des Leistungssignals oder eines Niederpegelsignals an den Ausgangsanschluss (103) gemäß dem Leistungssteuerungssignal, um das modulierte Signal an den Ausgangsanschluss (103) auszugeben.

9. Steuerungsverfahren nach Anspruch 7, wobei das Verfahren ferner umfasst:
Isolieren des Leistungssignals von dem Ausgangsanschluss (103) und Empfangen eines zweiten Datensignals über den Ausgangsanschluss (103).

10. Computerprogrammprodukt, das greifbar auf einem computerlesbaren Speichermedium gespeichert ist und Anweisungen einschließt, die, wenn sie auf einem Prozessor eines Geräts ausgeführt werden, das Gerät veranlassen, ein Steuerungsverfahren eines Adapters (100) nach einem der Ansprüche 7 bis 8 durchzuführen.

## Revendications

1. Adaptateur (100) utilisé pour connecter un dispositif frontal (200) à un dispositif dorsal (300), l'adaptateur (100) comprenant :
un dispositif de commande (101), configuré pour
générer un signal de commande d'alimentation en fonction d'un premier signal de données reçu à partir du dispositif frontal (200) ; et
un circuit modulateur (102), configuré pour
moduler un signal d'alimentation en fonction du signal de commande d'alimentation, et
fournir un signal modulé à une borne de sortie (103) du circuit modulateur (102),
le signal d'alimentation étant reçu à partir du dispositif frontal (200) et fourni au dispositif de commande (101),
dans lequel le circuit modulateur (102) comprend un premier élément de commutation (Q3) et un deuxième élément de commutation (Q1),
dans lequel la borne de sortie (103) comprend deux broches, une première broche et une seconde broche,
dans lequel le premier élément de commutation (Q3) est connecté entre la première broche et une broche VDD du dispositif de commande (101),
dans lequel le circuit modulateur (102) comprend une première diode (D3) et une seconde diode (D4), dans lequel la première diode (D3) est placée entre la première broche et la seconde broche, et la seconde diode (D4) est placée entre la première broche et la broche VDD du dispositif de commande (101).

2. Adaptateur (100) selon la revendication 1, dans lequel,
le circuit modulateur (102) est configuré pour appliquer le signal d'alimentation ou un signal de faible niveau à la borne de sortie (103) en fonction du signal de commande d'alimentation, de manière à fournir le signal modulé à la borne de sortie (103).

3. Adaptateur (100) selon la revendication 2,
dans lequel le premier élément de commutation (Q3) est configuré pour être activé ou désactivé sous la commande du signal de commande d'alimentation ; et
le deuxième élément de commutation (Q1) est configuré pour être activé ou désactivé sous la commande du signal de commande d'alimentation ;
dans lequel, lorsque le premier élément de commutation (Q3) est activé, le deuxième élément de commutation (Q1) est désactivé, le signal d'alimentation est appliqué à la borne de sortie (103), et le signal modulé passe à un niveau haut,
lorsque le premier élément de commutation (Q3) est désactivé, le deuxième élément de commutation (Q1) est activé, le signal de bas niveau est appliqué à la borne de sortie (103), et le signal modulé passe à un niveau bas.

4. Adaptateur (100) selon la revendication 3, dans lequel le circuit modulateur (102) comprend en outre :
un troisième élément de commutation (Q2), configuré pour être activé ou désactivé sous la commande d'un signal de commande d'impédance du dispositif de commande (101),
dans lequel, lorsque le troisième élément de commutation (Q2) est activé, le signal d'alimentation est modulé,
lorsque le troisième élément de commutation (Q2) est désactivé, le signal d'alimentation est isolé de la borne de sortie (103), et le dispositif de commande (101) reçoit un second signal de données par l'intermédiaire de la borne de sortie (103).

5. Adaptateur (100) selon la revendication 4, dans lequel,
la première broche est configurée pour être appliquée au signal modulé, et la seconde broche est connectée à une broche VSS du dispositif de commande (101) ;
le deuxième élément de commutation (Q1) et le troisième élément de commutation (Q2) se connectent en série entre la première broche et la seconde broche.

6. Adaptateur (100) selon la revendication 1, dans lequel l'adaptateur (100) comprend en outre :
un connecteur (104), configuré pour se connecter au dispositif frontal (200), de manière à recevoir le signal d'alimentation, le signal de bas niveau et le premier signal de données à partir du dispositif frontal (200).

7. Procédé de commande d'un adaptateur (100) selon l'une quelconque des revendications précédentes, dans lequel l'adaptateur (100) est utilisé pour connecter un dispositif frontal (200) à un dispositif dorsal (300), le procédé comprenant :
la génération d'un signal de commande d'alimentation en fonction d'un premier signal de données reçu à partir du dispositif frontal (200) ; et
la modulation d'un signal d'alimentation en fonction du signal de commande d'alimentation, et
la fourniture d'un signal modulé à une borne de sortie (103),
le signal de puissance étant reçu à partir du dispositif frontal (200) et fourni pour générer le signal de commande d'alimentation.

8. Procédé de commande selon la revendication 7, dans lequel la modulation d'un signal d'alimentation comprend :
l'application du signal d'alimentation ou d'un signal de bas niveau à la borne de sortie (103) en fonction du signal de commande d'alimentation, de manière à fournir le signal modulé à la borne de sortie (103).

9. Procédé de commande selon la revendication 7, dans lequel le procédé comprend en outre :
l'isolement du signal d'alimentation de la borne de sortie (103), et la réception d'un second signal de données par l'intermédiaire de la borne de sortie (103).

10. Produit de programme informatique stocké de manière tangible sur un support de stockage lisible par ordinateur et comportant des instructions qui, lorsqu'elles sont exécutées sur un processeur d'un équipement, amènent l'équipement à exécuter un procédé de commande d'un adaptateur (100) selon l'une quelconque des revendications 7 et 8.
